# DEMANDE DE BREVET EUROPEEN

(11) **EP 1 038 704 A1**
(43) Date de publication de la demande: **27.09.2000**
(21) Numéro de dépôt: 00400764.7
(22) Date de dépôt: 20.03.2000
(51) Int. Cl.: B60H 1/00

(54) **Dispositif de distribution d'air et ensemble de conditionnement d'air pour véhicule automobile comprenant ce dispositif**

(30) Priorité: 23.03.1999 FR 9903612
(71) Demandeur: Ecia Industrie, 92100 Boulogne-Billancourt (FR)
(72) Inventeur: Bugna, Esteban, 70200 Lantenot (FR)
(74) Mandataire: Jacobson, Claude

(57) **Abrégé**

Le dispositif de distribution d'air comprend un corps fixe (16) de distribution d'air auquel sont raccordés au moins deux buses (18 à 22) de distribution d'air disposées en aval de ce corps. Le dispositif comprend de plus un organe (24) de répartition d'air monté rotatif dans le corps (16) autour d'un axe (Z) lié à ce corps. L'organe de répartition d'air (24) est muni d'une face (26) de répartition d'air dans laquelle est ménagé un orifice (28) de passage d'air, de préférence en forme générale de secteur de cercle. La face (26) de répartition d'air affleure sensiblement un plan géométrique dans lequel s'étendent les orifices (18E à 22E) d'entrée d'air des buses. De préférence, ces orifices (18E à 22E) d'entrée d'air ont chacun une forme générale de secteur de cercle ou de disque. La répartition de l'air dans les buses (18 à 22) varie en fonction de la position relative de l'organe de répartition d'air et du corps de distribution (16). L'organe de répartition d'air comprend une extrémité amont délimitée par une surface convergeant sensiblement vers la face de répartition d'air et le centre de cette face de répartition d'air.

## Description

La présente invention concerne un dispositif de distribution d'air et un ensemble de conditionnement d'air pour véhicule automobile comportant ce dispositif.

On connaît déjà dans l'état de la technique un dispositif de distribution d'air, du type comprenant un corps fixe de distribution d'air auquel sont raccordées au moins deux buses de distribution d'air munies chacune d'un orifice d'entrée d'air et disposées en aval du corps en considérant le sens d'écoulement du flux d'air.

Dans le cas d'un véhicule automobile, le dispositif de distribution d'air est raccordé à une sortie aval de moyens de production d'air pulsé.

Habituellement, la répartition d'air dans les buses est réglée au moyen de volets mobiles associés aux buses. En général, il convient de prévoir un volet par buse. Les volets ont pour inconvénient notamment de nécessiter des moyens de pilotage relativement complexes et de causer des pertes de charge dans l'écoulement de l'air.

L'invention a notamment pour but de simplifier la structure des dispositifs de distribution d'air utilisés pour le conditionnement d'air dans les véhicules, en évitant notamment les pertes de charge créées par les volets utilisés dans les dispositifs classiques.

A cet effet, l'invention a pour objet un dispositif de distribution d'air, du type précité, caractérisé en ce qu'il comprend de plus un organe de répartition d'air monté rotatif dans le corps autour d'un axe lié à ce corps, cet organe de répartition d'air étant muni d'une extrémité aval délimitée par une face de répartition d'air dans laquelle est ménagé un orifice de passage d'air, cette face de répartition d'air affleurant sensiblement un plan géométrique dans lequel s'étendent les orifices d'entrée d'air des buses, la répartition de l'air dans les buses variant en fonction de la position relative de l'organe de répartition d'air et du corps de distribution d'air.

Suivant d'autres caractéristiques de ce dispositif de distribution d'aire :
- les orifices d'entrée d'air et de passage d'air ont chacun une forme générale de secteur de cercle ou bien de secteur de disque centré sur l'axe de rotation de l'organe de répartition ;
- le corps de distribution d'air et d'organe de répartition d'air ont des formes générales complémentaires cylindriques circulaires centrées sur l'axe de rotation de l'organe de répartition ;
- l'organe de répartition d'air comprend une extrémité amont délimitée par une surface convergeant sensiblement vers la face de répartition d'air et le centre de cette face de répartition d'air ;
- le dispositif de distribution d'air comprend trois buses de distribution d'air.

L'invention a également pour objet un ensemble de conditionnement d'air pour véhicule automobile, du type comprenant des moyens de production d'air pulsé, caractérisé en ce qu'il comprend un dispositif de distribution d'air tel que défini ci-dessus raccordé à une sortie aval des moyens de production d'air pulsé.

Suivant une autre caractéristique de cet ensemble de conditionnement d'air, une première buse comprend quatre orifices de sortie d'air destinés à être raccordés à deux aérateurs latéraux et deux aérateurs centraux d'une planche de bord du véhicule, une seconde buse comprend un orifice de sortie d'air destiné à être raccordé à des moyens de formation d'un flux d'air orienté vers un emplacement du véhicule destiné à recevoir les pieds d'un conducteur ou d'un passager avant du véhicule, et la troisième buse comprend un orifice de sortie d'air destiné à être raccordé à des moyens de formation d'un flux d'air orienté vers un pare-brise du véhicule.

L'invention sera mieux comprise à la lecture de la description qui va suivre donnée uniquement à titre d'exemple et faite en se référant aux dessins dans lesquels :
- les figures 1 à 6 sont des vues éclatées d'un ensemble de conditionnement d'air selon un premier mode de réalisation de l'invention dans différentes configurations d'utilisation ;
- la figure 7 est une vue en coupe axiale de l'organe de répartition d'air de l'ensemble représenté sur les figures précédentes ;
- la figure 8 est une vue similaire à la figure 5 montrant un ensemble de conditionnement d'air selon un second mode de réalisation de l'invention.

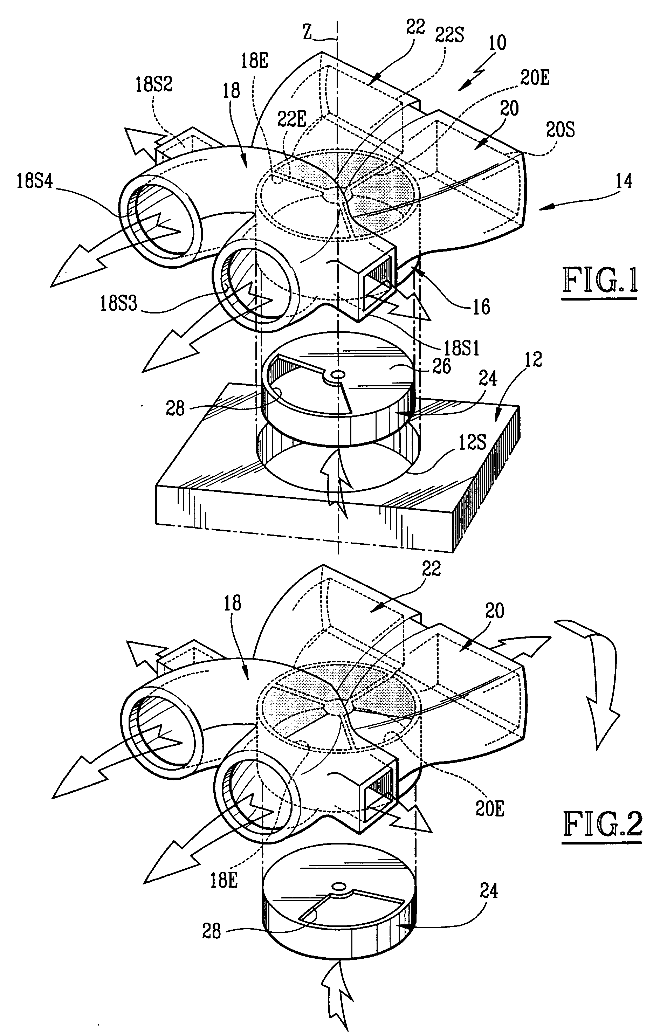

On a représenté sur la figure 1 un ensemble 10 de conditionnement d'air pour véhicule automobile selon un premier mode de réalisation de l'invention.

Cet ensemble 10 comprend des moyens classiques de production d'air pulsé 12 et un dispositif de distribution d'air 14 selon l'invention.

Dans ce qui suit, les orientations amont et aval seront considérées par rapport au sens d'écoulement du flux d'air.

Le dispositif de distribution d'air 14 est raccordé de façon classique à une sortie aval 12S des moyens 12 de production d'air pulsé.

Le dispositif de distribution d'air 14 comprend un corps fixe 16 auquel sont raccordés, de façon connue en soi, trois buses 18 à 22 de distribution d'air. Ces buses 18 à 22 sont disposées en aval du corps 16.

La première buse 18 comprend un orifice d'entrée 18E et quatre orifices de sortie 18S1, 18S2, 18S3, 18S4. Les deux premiers orifices de sortie , 18S1, 18S2 sont destinés à être raccordés à deux aérateurs latéraux respectifs agencés de façon classique dans une planche de bord du véhicule. Les deux autres orifices de sortie 18S3, 18S4 sont destinés à être raccordés à deux aérateurs centraux respectifs agencés de façon classique dans la planche de bord.

La deuxième buse 20 comprend un orifice d'entrée d'air 20E et un orifice de sortie d'air destiné à être raccordé à des moyens classiques de formation d'un flux d'air orienté vers l'emplacement de l'habitacle du véhicule destiné à recevoir les pieds d'un conducteur ou d'un passager avant du véhicule.

La troisième buse 22 comprend un orifice d'entrée d'air 22E et un orifice de sortie d'air 22S destiné à être raccordé à des moyens classiques de formation d'un flux d'air orienté vers un pare-brise du véhicule.

On notera que les trois orifices d'entrée d'air 18E à 22E des trois buses s'étendent dans un même plan géométrique matérialisé sur les figures 1 à 6 par les traces en pointillés de ces entrées d'air 18E à 22E dans ce plan.

Les trois buses 18 à 20, ne communiquant pas entre elles, sont venues de matière avec le corps 16 ou bien fixées sur ce corps 16 de façon connue en soi, par exemple par emboîtement dans le corps 16 des extrémités amont des buses dans lesquelles sont ménagées les orifices d'entrée d'air 18E à 22E.

Le dispositif de distribution d'air 14 comprend de plus un organe 24 de répartition d'air monté rotatif dans le corps 16 autour d'un axe Z lié à ce corps. De préférence, le corps de distribution d'air 16 et l'organe de répartition d'air 24 ont des formes générales complémentaires cylindriques circulaires centrées sur l'axe Z.

L'organe de répartition d'air 24 est muni d'une extrémité aval délimitée par une face 26 de répartition d'air dans laquelle est ménagée un orifice 28 de passage d'air, de préférence en forme générale de secteur de cercle centré sur l'axe Z.

La face 26 de répartition d'air affleure sensiblement le plan géométrique dans lequel s'étendent les orifices d'entrée d'air 18E à 22E des buses. On notera que, de préférence, les orifices d'entrée 18E à 22E des buses ont chacun une forme générale de secteur de cercle centrée sur l'axe Z. De préférence, également, les secteurs des trois orifices d'entrée d'air 18E à 22E ont des angles sensiblement égaux et l'angle de l'orifice de passage d'air 28 est au plus égal à l'angle des orifices d'entrée d'air 18E à 22 E des buses.

On comprend donc que la répartition de l'air dans les buses 18 à 22 varie en fonction de la position relative de l'organe de répartition d'air 24 et du corps de distribution 16.

Pour faciliter la compréhension du fonctionnement du dispositif de distribution d'air 14, on a représenté sur chaque figure 1 à 6 une zone grisée matérialisant la position de la face 26 de l'organe de répartition d'air par rapport aux orifices d'entrée d'air des buses lorsque cet organe de répartition d'air 24 est logé dans le corps 16 en position de fonctionnement.

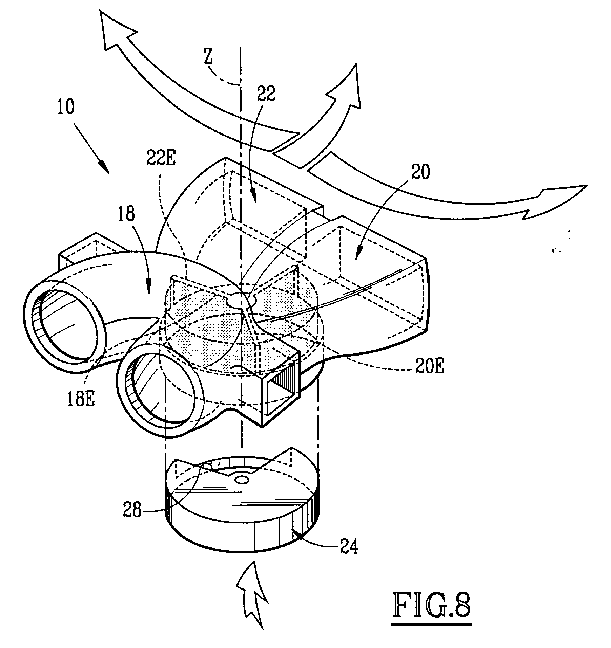

En se référant à la figure 7, on voit que l'organe de répartition d'air 24 comprend une extrémité amont délimitée par une surface 30 convergeant sensiblement vers la face 26 de répartition d'air et le centre de cette dernière. Du fait de la convergence de cette surface 30, les pertes de charge du flux d'air traversant cet organe de répartitions sont limitées.

On précisera ci-dessous les principales caractéristiques du fonctionnement du dispositif de distribution d'air selon l'invention en se référant aux figures 1 à 6 dans lesquelles les flux d'air traversant les différents éléments du dispositif de distribution d'air sont représentés par des flèches.

Sur la figure 1, l'organe de répartition d'air 24 est positionné par rapport au corps 16 de manière que l'orifice de passage d'air 28 soit en correspondance avec l'orifice d'entrée d'air 18E de la première buse. Le flux d'air provenant des moyens de production d'air pulsé 12 est ainsi dirigé uniquement dans la première buse 18, par l'intermédiaire de l'organe de répartition d'air 24, de manière à envoyer de l'air pulsé vers les aérateurs latéraux et centraux de la planche de bord.

Sur les figures 2 à 6, on a représenté des positions successives de l'organe de répartition 24 lorsque celui-ci est déplacé en rotation autour de l'axe Z, dans le sens anti-horaire en considérant les figures, à l'aide de moyens classiques éventuellement motorisés.

Sur la figure 2, l'orifice de passage d'air 28 est à cheval sur les entrées 18E et 20E des première et seconde buses. Le flux d'air est ainsi réparti entre ces première et seconde buses 18,20 de manière à envoyer de l'air à la fois vers les aérateurs latéraux et centraux de la planche de bord et les pieds du conducteur ou du passager avant.

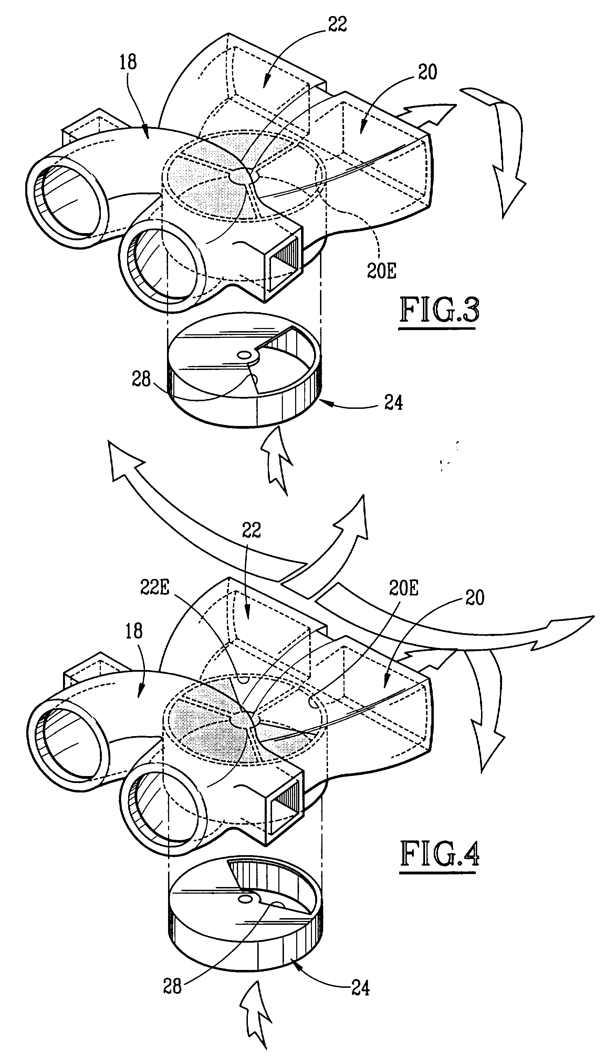

Sur la figure 3, l'orifice de passage d'air 28 est en correspondance avec l'entrée d'air 20E de la deuxième buse, si bien que le flux d'air est envoyé uniquement dans cette deuxième buse 20, vers les pieds du passager ou du conducteur.

Sur la figure 4, l'orifice de passage d'air 28 est à cheval sur les entrées d'air 20E et 22E des deuxième et troisième buses. Le flux d'air est ainsi réparti entre ces deuxième et troisième buses 20,22 de manière à envoyer de l'air à la fois vers les pieds du conducteur ou du passager et vers le pare-brise.

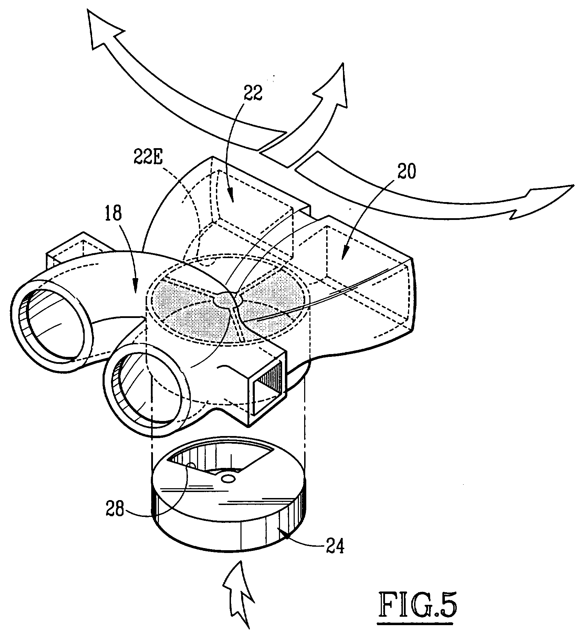

Sur la figure 5, l'orifice de passage d'air 28 est en correspondance avec l'entrée d'air 22E de la troisième buse, si bien que le flux d'air est envoyé uniquement dans cette troisième buse 22, vers le pare-brise.

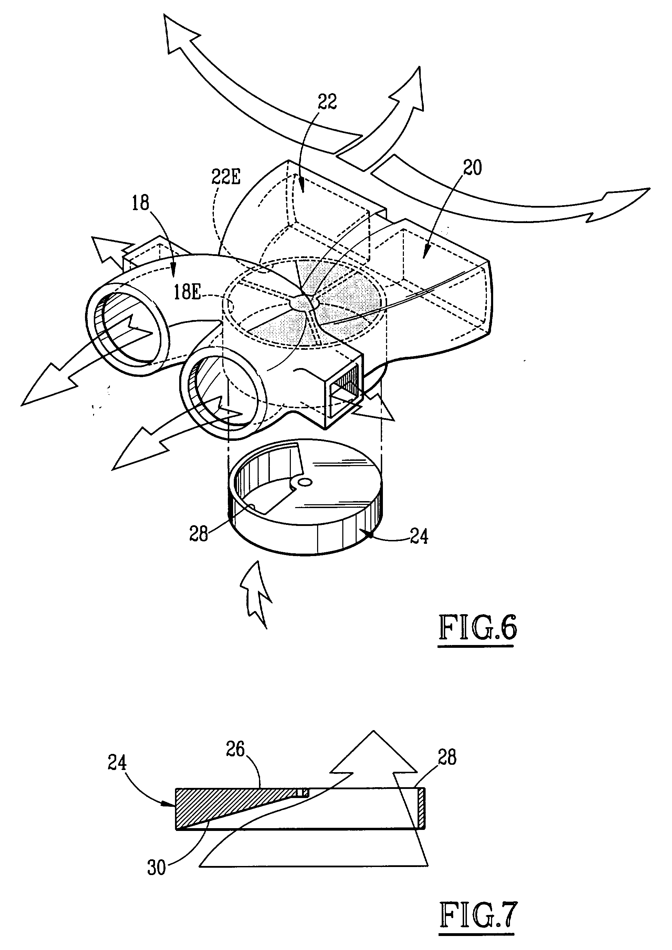

Sur la figure 6, l'orifice de répartition d'air 28 est à cheval sur les entrées d'air 22E et 18E des troisième et premières buses. Le flux d'air est ainsi réparti entre ces troisième et première buses 22,18 de manière à envoyer de l'air à la fois vers le pare-brise et les aérateurs latéraux et centraux de la planche de bord.

Sur la figure 8, on a représenté un ensemble 10 de conditionnement d'air selon un second mode de réalisation de l'invention. Sur cette figure 8, les éléments analogues à ceux des figures précédentes sont désignés par des références identiques.

Dans ce cas, les orifices d'entrée d'air 18E à 22E et de passage d'air 28 ont chacun une forme générale de secteur de disque centré sur l'axe Z. Ceci permet un écoulement axial (sensiblement parallèlement à l'axe Z) et radial du flux d'air dans les orifices d'entrée d'air 18E à 22E et de passage d'air 28, de façon à augmenter le débit du flux d'air à travers ces orifices.

Parmi les avantages de l'invention on notera les suivants.

Le dispositif de distribution d'air selon l'invention est relativement peu encombrant. L'organe de répartition d'air permet à lui seul de répartir le flux d'air provenant des moyens de production d'air pulsé dans les trois buses. Le réglage de la répartition d'air peut donc être effectué au moyen d'un moteur unique entraînant l'organe de répartition d'air en rotation autour de son axe.

Par ailleurs, la surface convergente délimitant l'extrémité amont de l'organe de répartition d'air limite efficacement les pertes de charge du flux d'air traversant cet organe.

L'invention ne se limite pas aux modes de réalisation décrits. En particulier, le dispositif de distribution d'air selon l'invention peut comporter deux ou plus de trois buses. Par ailleurs, les orifices d'entrée d'air des buses et l'orifice de passage d'air de l'organe de répartition n'ont pas nécessairement des formes de secteurs de cercle.

## Revendications

1. Dispositif de distribution d'air, du type comprenant un corps fixe (16) de distribution d'air auquel sont raccordées au moins deux buses (18 à 22) de distribution d'air munies chacune d'un orifice (18E à 22E) d'entrée d'air et disposées en aval du corps (16) en considérant le sens d'écoulement du flux d'air, **caractérisé en ce qu**'il comprend de plus un organe de répartition d'air (24) monté rotatif dans le corps (16) autour d'un axe (Z) lié à ce corps (16), cet organe de répartition d'air (24) étant muni d'une extrémité aval délimitée par une face (26) de répartition d'air dans laquelle est ménagé un orifice (28) de passage d'air, cette face de répartition d'air (26) affleurant sensiblement un plan géométrique dans lequel s'étendent les orifices (18E à 22E) d'entrée d'air des buses, la répartition de l'air dans les buses (18 à 22) variant en fonction de la position relative de l'organe de répartition d'air (24) et du corps de distribution d'air (16), et en ce que l'organe de répartition d'air (24) comprend une extrémité amont délimitée par une surface (30) convergeant sensiblement vers la face de répartition d'air (26) et le centre de cette face de répartition d'air (26).

2. Dispositif selon la revendication 1, caractérisé en ce que les orifices d'entrée d'air (18E à 22E) et de passage (28) ont chacun une forme générale de secteur de cercle centré sur l'axe de rotation de l'organe de répartition (24).

3. Dispositif selon la revendication 1, caractérisé en ce que les orifices d'entrée d'air (18E à 22E) et de passage d'air (28) ont chacun une forme générale de secteur de disque centré sur l'axe de rotation de l'organe de répartition (24).

4. Dispositif selon l'une quelconque des revendications 1 à 3, caractérisé en ce que le corps de distribution d'air (16) et l'organe de répartition d'air (24) ont des formes générales complémentaires cylindriques circulaires centrées sur l'axe de rotation (Z) de l'organe de répartition (24).

5. Dispositif selon l'une quelconque des revendications précédentes, caractérisé en ce qu'il comprend trois buses de distribution d'air (18 à 22).

6. Ensemble de conditionnement d'air pour véhicule automobile du type comprenant des moyens (12) de production d'air pulsé , caractérisé en ce qu'il comprend un dispositif de distribution d'air (14) selon l'une quelconque des revendications précédentes raccordé à une sortie aval (12S) des moyens de production d'air pulsé.

7. Ensemble selon la revendication 6 comprenant un dispositif de distribution d'air selon la revendication 5, caractérisé en ce que
une première buse (18) comprend quatre orifices de sortie d'air (18S1 à 18S4) destinés à être raccordés à deux aérateurs latéraux et deux aérateurs centraux d'une planche de bord du véhicule,
une seconde buse (20) comprend un orifice de sortie d'air (20S) destiné à être raccordé à des moyens de formation d'un flux d'air orienté vers un emplacement du véhicule destiné à recevoir les pieds d'un conducteur ou d'un passager avant du véhicule, et
la troisième buse (22) comprend un orifice de sortie d'air (22S) destiné à être raccordé à des moyens de formation d'un flux d'air orienté vers un pare-brise du véhicule.
